# EUROPEAN PATENT APPLICATION

(11) **EP 4 521 553 A1**
(43) Date of publication of application: **12.03.2025**
(21) Application number: 24193628.5
(22) Date of filing: 08.08.2024
(51) Int. Cl.: H01Q 1/28, B64U 10/00, H01Q 3/26, G01S 7/36, H01Q 3/04, B64U 101/00

(54) **RADIO FREQUENCY DEVICE FOR A VEHICLE AND ASSOCIATED METHODS**

(30) Priority: 05.09.2023 US 202318460951
(71) Applicant: Harris Global Communications, Inc., Albany, NY 12207 (US)
(72) Inventor: BUDUSON, James, North Chili, 14514 (US); MAJKOWSKI, Joseph D., Pittsford, 14534 (US); BURKE, Peter, Hilton, 14468 (US); HOOD, James J., Victor, 14564 (US)
(74) Representative: Schmidt, Steffen J.

(57) **Abstract**

A radio frequency (RF) device **30** for a vehicle **20** may include an antenna **60,** an RF receiver **24** and a controller **26.** The antenna **60** may include a housing **61,** a rotatable base **62** carried by the housing, an actuator **64** to selectively rotate the base, a pair of spaced apart antenna elements **66** carried by the rotatable base, and a phase sifter **68** coupled to the pair of antenna elements **66** to define an antenna pattern **70** having a pair of opposing nulls **72.** The RF receiver **24** is coupled to the antenna **60,** and the controller **26** may drive the actuator **64** to steer the antenna pattern **70** based upon the RF receiver **24.**

## Description

### Technical Field

The present disclosure relates to radio frequency (RF) devices, and, more particularly, to an RF device carried by a remotely controlled unmanned vehicle and associated methods.

### Background

Remotely controlled unmanned vehicles include airborne, land and water vehicles. Unmanned airborne vehicles (UAVs) are commonly referred to as drones. An operator uses radio frequency (RF) signals to remotely control an unmanned vehicle. In some cases, the unmanned vehicle may have reduced signal reception due to its operating environment.

Reduced signal reception may be caused by an RF interference source within the operating environment of the unmanned vehicle. The RF interference source may be intentional or unintentional.

Intentional RF interference may be from an RF jammer, for example. In this case, the RF jammer operates within the same frequency band as an RF receiver being carried by the unmanned vehicle. Unintentional RF interference may be from RF transmitters operating in close proximity to the unmanned vehicle.

There is a need to operate unmanned vehicles in the presence of an RF interference source. If RF signal reception at the RF device is degraded too much due to the RF interference source, then an operator of the unmanned vehicle may lose control.

### Summary

A radio frequency (RF) device for a vehicle may include an antenna, an RF receiver and a controller. The antenna may include a housing, a rotatable base carried by the housing, an actuator to selectively rotate the base, a pair of spaced apart antenna elements carried by the rotatable base, and a phase sifter coupled to the pair of antenna elements to define an antenna pattern having a pair of opposing nulls. The RF receiver is coupled to the antenna, and the controller may drive the actuator to steer the antenna pattern based upon the RF receiver. The vehicle may be unmanned.

The pair of opposing nulls in the antenna pattern may be 180 degrees apart. The controller may be configured to steer the antenna pattern so that one of the nulls is directed toward an RF interference source. The RF receiver may operate over a frequency range, and the pair of opposing nulls are aligned over the frequency range.

The phase shifter may include at least one discrete component. In another embodiment, the phase shifter may include a pair of feeds coupled to respective antenna elements in a reverse configuration.

The controller may be configured to steer the antenna pattern based upon received signal strength. A spacing between the pair of antenna elements may be in a range of 0.1 - 0.7 wavelength of an operating frequency of the RF receiver.

The pair of antenna elements may comprise a pair of dipole antenna elements extending upwardly from the base. The RF receiver may comprise a frequency-hopping spread spectrum (FHSS) receiver, a direct sequence spread spectrum (DSSS) receiver, or an orthogonal frequency-division multiplexing (OFDM) receiver.

Another aspect is directed to an RF device for a vehicle that may include an antenna comprising a housing, a rotatable base carried by the housing, an actuator configured to selectively rotate the base, a pair of spaced apart dipole antenna elements extending upwardly from the base, and a phase sifter coupled to the pair of antenna elements to define an antenna pattern having a pair of opposing nulls. An RF receiver is coupled to the antenna. A controller is coupled to the RF receiver and may drive the actuator to rotate the antenna pattern while determining received signal strengths of received RF signals, and to stop rotation of the antenna pattern at a desired received signal strength.

Yet another aspect is directed to a method for operating an RF device for a vehicle as described above. The method may include operating the RF receiver coupled to the antenna, and operating the controller to drive the actuator to steer the antenna pattern based upon RF signals received by the RF receiver.

### Brief Description of the Drawings

FIG. 1 is a schematic diagram of an RF device for a vehicle in which various aspects of the disclosure may be implemented.
FIG. 2 is a top view of the vehicle illustrated in FIG. 1 being controlled by an operator in an environment that does not have an RF interference source.
FIG. 3 is a top view of the vehicle illustrated in FIG. 2 being controlled by the operator in an environment that has an RF interference source.
FIG. 4 is a graph of antenna patterns having nulls that remain aligned over a wide range of frequencies for the RF device illustrated in FIG. 1.
FIG. 5 is a graph of antenna patterns having nulls that move around over the same range of frequencies in FIG. 4.
FIG. 6 is a more detailed schematic diagram of the RF device illustrated in FIG. 1.
FIG. 7 is a schematic diagram of a vehicle with an RF device in which various aspects of the disclosure may be implemented.
FIG. 8 is a top view of the vehicle illustrated in FIG. 7 being controlled by an operator in an environment that does not have an RF interference source.
FIG. 9 is a top view of the vehicle illustrated in FIG. 7 being controlled by the operator in an environment that has an RF interference source.
FIG. 10 is a more detailed schematic diagram of the vehicle illustrated in FIG. 7.

### Detailed Description

The present description is made with reference to the accompanying drawings, in which exemplary embodiments are shown. However, many different embodiments may be used, and thus the description should not be construed as limited to the particular embodiments set forth herein. Rather, these embodiments are provided so that this disclosure will be thorough and complete. Like numbers refer to like elements throughout, and prime notations may be used to indicate similar elements in different embodiments.

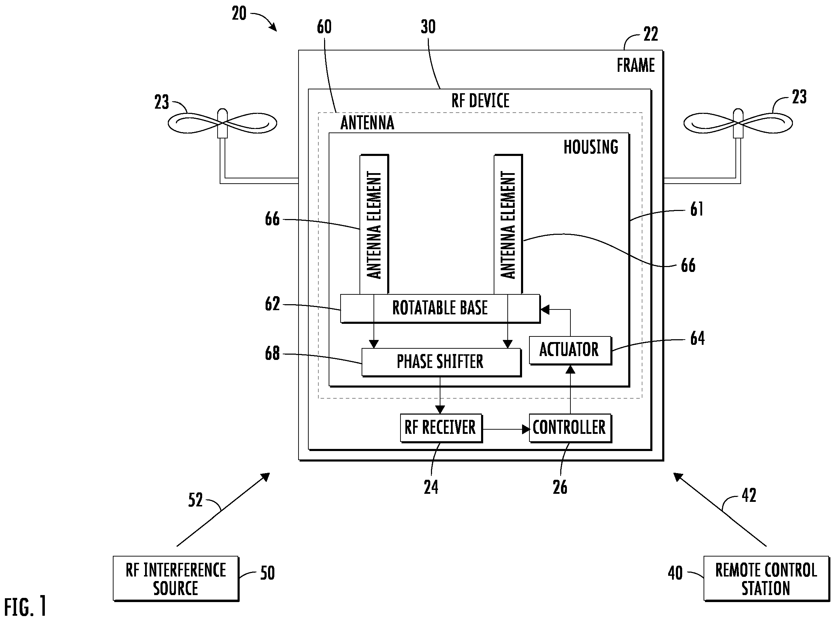

Referring initially to FIG. 1-3, a radio frequency (RF) device **30** for a vehicle **20** will be discussed. The vehicle **20** as shown is an unmanned aerial vehicle (UAV), which may also be referred to as a drone. The vehicle **20** includes a frame **22** carrying a propulsion arrangement **23** to provide lift and maneuverability. The propulsion arrangement **23** may be based on one or more propeller blades, for example. The vehicle **20** may operate in low-to-medium altitude airspace, such as up to 100 meters, for example. In other embodiments, the vehicle **20** may be configured to operate on land or the water.

Control of the vehicle **20** is based on the RF device **30** receiving RF control signals **42** from a remote control station **40** controlled by an operator **44.** The RF device **30** needs to have good reception of the RF control signals **42** to ensure control of the vehicle **20.** If an RF interference source **50** within the operating environment of the unmanned vehicle **20** is transmitting RF interference signals **52,** then these signals may disrupt control of the vehicle **20.** If control of the vehicle **20** is disrupted or lost, then the vehicle may not complete its intended goal or mission.

The RF device **30** includes an antenna **60,** an RF receiver **24** and a controller **26.** Although not shown, the RF device **30** may also include a transmitter to communicate with the remote control station **40.** The antenna **60** includes a housing **61,** a rotatable base **62** carried by the housing, an actuator **64** configured to selectively rotate the base, a pair of spaced apart antenna elements **66** carried by the rotatable base, and a phase sifter **68** coupled to the pair of antenna elements **66** to define an antenna pattern **70** having a pair of opposing nulls **72.** The pair of opposing nulls **72** in the antenna pattern **70** may be 180 degrees apart.

The controller **26** is configured to drive the actuator **64** to steer the antenna pattern **70** based upon the RF receiver **24.** RF signals received by the RF receiver **24** may be passed on to the controller **26** to determine received signal strength of the RF signals. The controller **26** may then steer the antenna pattern **70** based up the determined received signal strengths. For example, the controller may steer the antenna pattern **70** so that one of the nulls **72** is directed toward an RF interference source **50.** This allows the antenna **60** to be resilient in the presence of an RF interference source **50** without changing orientation or a direction of travel of the vehicle **20.**

The antenna elements **66** may be loop antennas, horn antennas, patch antennas, helical antennas, monopole antennas or dipole antennas, for example. For discussion purposes, the antenna elements **66** are configured as dipole antenna elements. Spacing between the antenna elements **66** is in a range of 0.1 - 0.7 wavelength of the operating frequency of the RF device **30.** Typically, the wavelength is determined based on a highest operating frequency of the RF device **30.**

The RF device **22** is not limited to a particular frequency band. The operating frequency may be within 0.3 - 3.0 GHz, for example. For discussion purposes, the dipole antenna elements **66** are sized to operate between 1.35 - 2.4 GHz. In this configuration, the dipole antenna elements **66** are about 5 inches in height with a spacing of about 2.5 inches therebetween. This corresponds to the antenna **60** having a height of about 6 inches and a diameter of about 3.5 inches, with a weight being less than 16 ounces. This allows the antenna **60** to be small, lightweight and low cost.

The antenna **60** operates as a linear array while the dipole antenna elements **66** are combined 180 degrees out of phase from one another. This causes the antenna pattern **70** to be circular-shaped with the pair of opposing nulls **72.** In one embodiment, the phase shifter **68** includes at least one discrete component so that the dipole antenna elements **66** are combined 180 degrees out of phase from one another.

In another embodiment, the phase shifter **68** may include a pair of coaxial or stripline type feeds coupled to respective dipole antenna elements **66** in a reverse configuration so that the dipole antenna elements **66** are combined 180 degrees out of phase from one another. For the coaxial feeds, each coaxial cable has a center conductor and an outer conductor. The center and outer conductors of one of the coaxial cables for one of the dipole antenna elements is connected opposite of how the center and outer conductors of the other coaxial cable are connected to the other dipole antenna element.

As will be discussed below, the antenna **60** may also be configured to operate with one dipole antenna element **66** by switching out the other dipole antenna element **66.** Operation with a single dipole antenna element **66** generates an omni-directional antenna pattern without any nulls. The omni-directional antenna pattern may be used when the signal strength of received RF signals is above a threshold. This typically indicates that the RF signals received by the RF receiver are not being degraded by an RF interference source **50.**

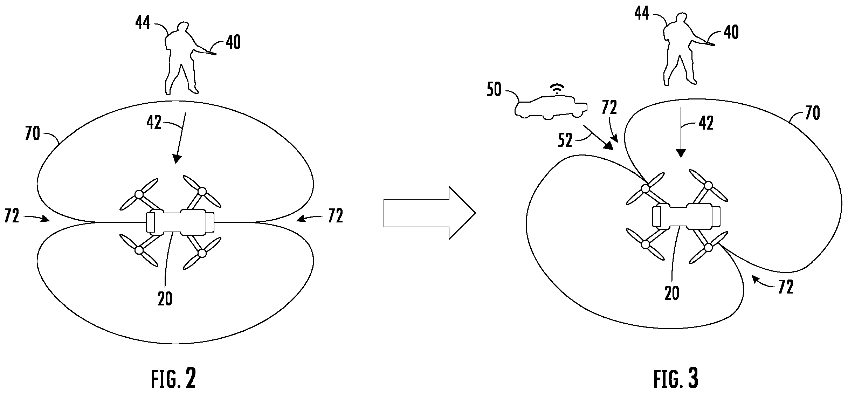

If RF interference signals **52** from an RF interference source **50** are not being detected by the RF device **30,** then the antenna pattern **70** may be positioned by the controller **26** so that the pair of nulls **72** is directed away from the operator **44,** as shown in FIG. 2. However, if RF interference signals **52** are being detected by the RF device **30,** then the antenna pattern **70** is positioned by the controller **26** so that one of the nulls **72** is directed towards the RF interference source **50,** as shown in FIG. 3.

As the antenna pattern **70** is steered by the controller **26,** orientation of the frame **22** via the propulsion arrangement **23** may remain the same. This allows the RF interference signals **52** to be mitigated without having to change a flight path of the vehicle **20.**

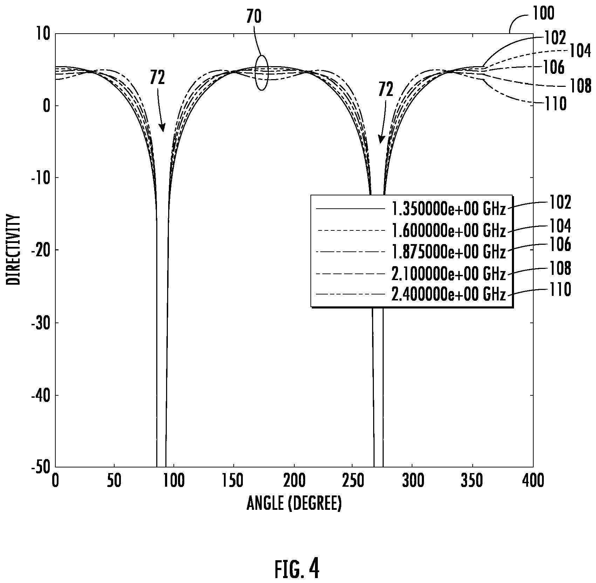

An advantage of the antenna **60** having a pattern **70** with a pair of opposing nulls **72** is that the nulls are aligned over an operating frequency range of the RF device **30,** as shown by graph **100** in FIG. 4. This corresponds to the pair of antenna elements **66** being combined out-of-phase, as noted above. The operating frequency of the RF device **30** may vary between 1.35 GHz to 2.4 GHz, for example.

Line **102** corresponds to the antenna pattern **70** at 1.35 GHz, line **104** corresponds to the antenna pattern **70** at 1.60 GHz, line **106** corresponds to the antenna pattern **70** at to 1.875 GHz, line **108** corresponds to the antenna pattern **70** at 2.10 GHz, and line **110** corresponds to the antenna pattern **70** at 2.40 GHz.

The respective antenna patterns **70** corresponding to lines **102-110** basically overlap one another. Consequently, the nulls **72** remain consistent or aligned across a wide frequency band. This allows the RF receiver **22** to receive fixed frequency or frequency hopping RF control signals **42** while mitigating interference from an RF interference source **50.**

To provide further resiliency in the presence of an RF interference source **50,** the RF receiver **24** may be a spread spectrum receiver, for example. In one embodiment, the RF receiver **24** may be a frequency-hopping spread spectrum (FHSS) receiver to receive RF control signals **42** that are spread over a wide range of frequencies using frequency hopping. In another embodiment, the RF receiver **24** may be a direct sequence spread spectrum (DSSS) receiver to receive RF control signals **42** that are spread over a wide range of frequencies using a code. In yet another embodiment, the RF receiver **24** may be an orthogonal frequency-division multiplexing (OFDM) receiver to receive RF control signals **42** that are based on closely spaced narrowband subchannel frequencies instead of a single wideband channel frequency.

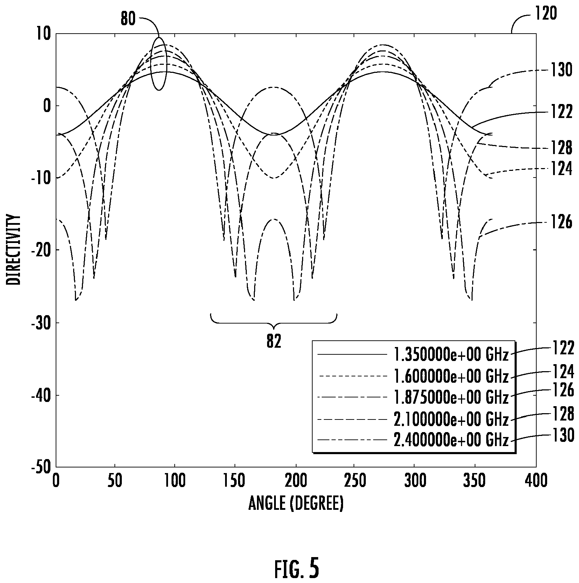

For comparison purposes, reference is directed to graph **120** in FIG. 5 where the antenna patterns **80** have nulls **82** that do not remained aligned over the same frequency range of 1.35 GHz to 2.4 GHz. Instead, the nulls **82** move around based on a particular operating frequency. This corresponds to traditional beam steering where the dipole antenna elements 66 are not combined out-of-phase.

Line **122** corresponds to the antenna pattern **80** at 1.35 GHz, line **124** corresponds to the antenna pattern **80** at 1.60 GHz, line **126** corresponds to the antenna pattern **80** at to 1.875 GHz, line **128** corresponds to the antenna pattern **80** at 2.10 GHz, and line **130** corresponds to the antenna pattern **80** at 2.40 GHz.

With the nulls **82** changing at different frequencies, this makes it more difficult to operate with a frequency hopping or spread spectrum receiver. It would be difficult to point a null **82** of the antenna pattern **80** toward an RF interference source **50** at a particular frequency and then try to point the moving null **82** toward the RF interference source **50** at a different frequency.

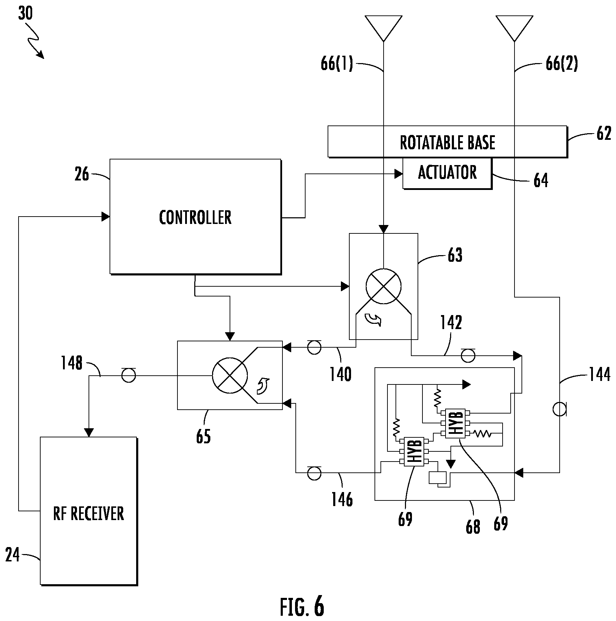

Referring now to FIG. 6, a more detailed block diagram of the RF device **30** will be discussed. In particular, the RF device **30** includes a pair of RF switches **63** and **65** that are controlled by the controller **26.** The RF switches **63, 65** are controlled so that the RF device **30** will operate with both of the dipole antenna elements **66(1), 66(2)** or operate with just one of the dipole antenna elements **66(1).**

Operation with a single dipole antenna element **66(1)** generates an omni-directional antenna pattern without any nulls. The omni-directional antenna pattern may be used when the strength of received RF signals is above a threshold. In this case, RF switch **63** is switched so that coaxial cable **140** is connected to dipole antenna element **66(1).** Consequently, coaxial cable **142** is not connected to dipole antenna element **66(1).** RF switch **65** is switched so that coaxial cable **140** is connected with coaxial cable **148,** which is connected to the RF receiver **24.** Coaxial cable **146** from the phase shifter **68** is not connected to coaxial cable **148.**

If the strength of received RF signals falls below a threshold, the controller **26** controls the RF switches **63, 65** so that the RF device **30** operates with both of the dipole antenna elements **66(1), 66(2).** An RF interference source **50** may be causing the RF signals to fall below the threshold, for example.

The controller **26** controls RF switch **63** so that coaxial cable **142** is connected to dipole antenna element **66(1)** instead of coaxial cable **140.** The phase shifter **24** now receives RF signals from dipole antenna element **66(1).** The phase shifter **24** also receives RF signals from dipole antenna element **66(2)** via coaxial cable **144.** The phase shifter **24** may include one or more discrete components, for example. The controller **26** controls RF switch **65** so that coaxial cable **146** is connected with coaxial cable **148,** which is still connected to the RF receiver **24.**

The controller **26** is connected to the RF receiver **24** to determine strength of the received RF signals. A value of the received signal strength may be determined as a signal-to-noise ratio (SNR) or as a received signal strength indicator (RSSI). Based on the strength of the received RF signals, the RF device **30** will control the RF switches **63, 65** accordingly.

Initial operation of the RF device **30** may be with dipole antenna element **66(1),** for example. If the signal strength of the received RF signals drops below an initial threshold, then the controller **26** controls the RF switches **63, 65** so that the RF device **30** is operating with both of the dipole antenna elements **66(1), 66(2).**

The controller **26** may then apply a control loop to mechanically sweep the antenna pattern **70** so that one of the nulls **72** maintains being directed towards the RF interference source **50** causing the initial threshold drop. The controller **26** may be a proportional derivative (PD) controller, for example. An output of the PD controller varies in proportion to the error signal as well as with the derivative of the error signal. An advantage of the PD controller is to increase the stability of steering one of the nulls **72** of the antenna pattern **70** toward an RF interference source **50** by improving control since it has the ability to predict future errors.

Another aspect is directed to a method for operating the RF device **30** for a vehicle **20** as described above. The RF device **30** includes an antenna **60** comprising a housing **61,** a rotatable base **62** carried by the housing, an actuator **64** to selectively rotate the base, a pair of spaced apart antenna elements **66** carried by the rotatable base, and a phase shifter **68** coupled to the pair of antenna elements to define an antenna pattern **70** having a pair of opposing nulls **72.** The method includes operating an RF receiver **24** coupled to the antenna **60,** and operating a controller **26** to drive the actuator **64** to steer the antenna pattern **70** based upon RF signals received by the RF receiver **24.**

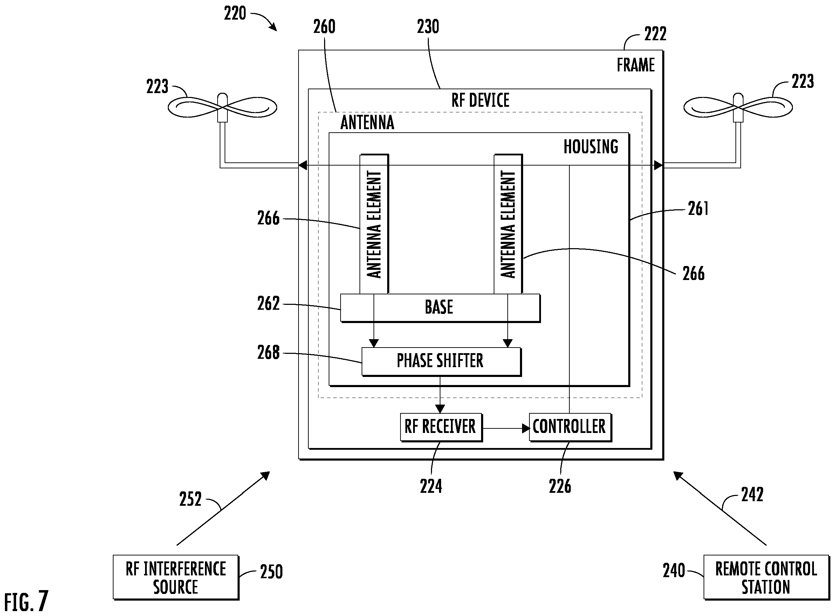

Referring now to FIGS. 7-9, another aspect of the present description is directed to a vehicle **220** carrying a radio frequency (RF) device **230.** The vehicle **220** as shown is an unmanned aerial vehicle (UAV), which may also be referred to as a drone. Certain reference numbers as used above will also be used below but will be preceded by a 2 to refer to like elements.

The vehicle **220** includes a frame **222** carrying a propulsion arrangement **223** to provide lift and maneuverability and to orient the frame **222.** The frame **222** may also be referred to as a chassis or fuselage. The propulsion arrangement **223** may be based on one or more propeller blades, for example. The vehicle **220** may operate in low-to-medium altitude airspace, such as up to 100 meters, for example.

Control of the vehicle **220** is based on the RF device **230** receiving RF control signals **242** from a remote control station **240** controlled by an operator **244.** The RF device **230** needs to have good reception of the RF control signals **242** to ensure control of the vehicle **220.** If an RF interference source **250** within the operating environment of the unmanned vehicle **220** is transmitting RF interference signals **252,** then these signals may disrupt control of the vehicle **220.** If control of the vehicle **220** is disrupted or lost, then the vehicle may not complete its intended goal or mission.

The RF device **230** includes an antenna **260,** an RF receiver **224** and a controller **226.** Although not shown, the RF device **230** may also include a transmitter to communicate with the remote control station **240.** The antenna **260** includes a housing **261,** a base **262** carried by the housing, a pair of spaced apart antenna elements **66** carried by the base, and a phase sifter **268** coupled to the pair of antenna elements **266** to define an antenna pattern **270** having a pair of opposing nulls **272.** The pair of opposing nulls **272** in the antenna pattern **270** may be 180 degrees apart.

Controller **226** is configured to control the propulsion arrangement **223** to orient the frame **222** to steer the antenna pattern **270** based upon the RF receiver **224.** RF signals received by the RF receiver **224** may be provided to the controller **226** to determine received signal strength of the RF signals. The controller **226** may then orient the frame **222** to steer the antenna pattern **270** based up the determined received signal strengths. For example, the controller **226** may orient the frame **222** to steer the antenna pattern **270** so that one of the nulls **272** is directed toward an RF interference source **250.** This allows the antenna **260** to be resilient in the presence of an RF interference source **250** by changing orientation or a direction of travel of the vehicle **220.**

The antenna elements **266** may be loop antennas, horn antennas, patch antennas, helical antennas, monopole antennas or dipole antennas, for example. For discussion purposes, the antenna elements **266** are configured as dipole antenna elements. Spacing between the antenna elements **266** is in a range of 0.1 - 0.7 wavelength of the operating frequency of the RF device **230.** Typically, the wavelength is determined based on a highest operating frequency of the RF device **230.**

The RF device **222** is not limited to a particular frequency band. The operating frequency may be within 0.3 - 3.0 GHz, for example. For discussion purposes, the dipole antenna elements **266** are sized to operate between 1.35 - 2.4 GHz. In this configuration, the dipole antenna elements **266** are about 5 inches in height with a spacing of about 2.5 inches therebetween. This corresponds to the antenna **260** having a height of about 6 inches and a diameter of about 3.5 inches, with a weight being less than 16 ounces. This allows the antenna **260** to be small, lightweight and low cost.

The antenna **260** operates as a linear array while the dipole antenna elements **266** are combined 180 degrees out of phase from one another. This causes the antenna pattern **270** to be circular-shaped with the pair of opposing nulls **272.** In one embodiment, the phase shifter **268** includes at least one discrete component so that the dipole antenna elements **266** are combined 180 degrees out of phase from one another.

In another embodiment, the phase shifter **268** may include a pair of coaxial or stripline type feeds coupled to respective dipole antenna elements **266** in a reverse configuration so that the dipole antenna elements **266** are combined 180 degrees out of phase from one another. For the coaxial feeds, each coaxial cable has a center conductor and an outer conductor. The center and outer conductors of one of the coaxial cables for one of the dipole antenna elements is connected opposite of how the center and outer conductors of the other coaxial cable are connected to the other dipole antenna element.

As will be discussed below, the antenna **260** may also be configured to operate with one dipole antenna element **266** by switching out the other dipole antenna element **266.** Operation with a single dipole antenna element **266** generates an omni-directional antenna pattern without any nulls. The omni-directional antenna pattern may be used when the signal strength of received RF signals is above a threshold. This typically indicates that the RF signals received by the RF receiver are not being degraded by an RF interference source **250.**

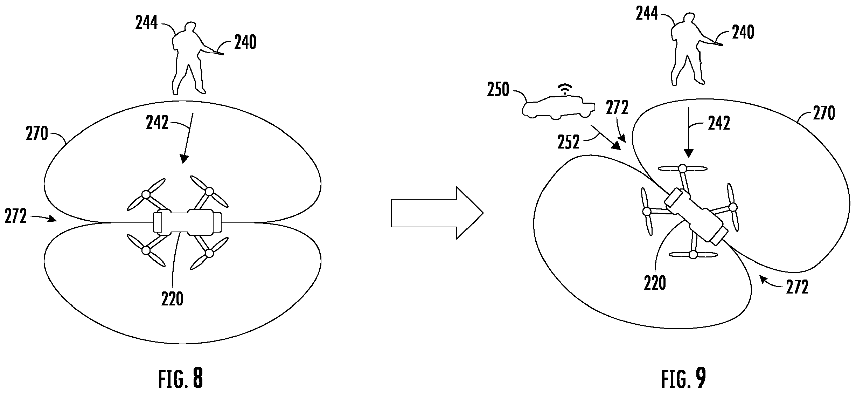

If RF interference signals **252** from an RF interference source **250** are not being detected by the RF device **230,** then the antenna pattern **270** may be positioned by orienting the frame **222** so that the pair of nulls **272** is directed away from the operator **244,** as shown in FIG. 8. However, if RF interference signals **252** are being detected by the RF device **230,** then the frame **222** is oriented so that one of the nulls **272** is directed towards the RF interference source **250,** as shown in FIG. 9. This allows the RF interference signals **252** to be mitigated by changing orientation or a flight path of the vehicle **220.**

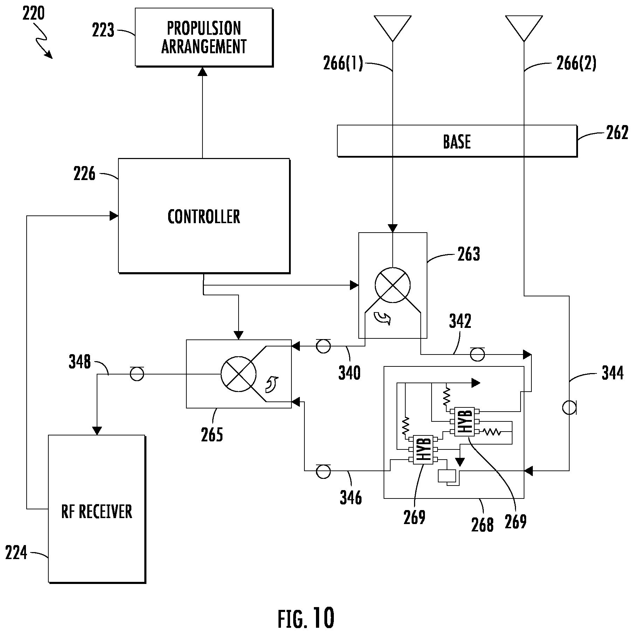

Referring now to FIG. 10, a more detailed block diagram of the vehicle **220** with the RF device **230** will be discussed. In particular, the RF device **230** includes a pair of RF switches **263** and **265** that are controlled by the controller **226.** The RF switches **263, 265** are controlled so that the RF device **230** will operate with both of the dipole antenna elements **266(1), 266(2)** or operate with just one of the dipole antenna elements **266(1).**

Operation with a single dipole antenna element **266(1)** generates an omni-directional antenna pattern without any nulls. The omni-directional antenna pattern may be used when the strength of received RF signals is above a threshold. In this case, RF switch **263** is switched so that coaxial cable **340** is connected to dipole antenna element **266(1).** Consequently, coaxial cable **342** is not connected to dipole antenna element **266(1).** RF switch **265** is switched so that coaxial cable **240** is connected with coaxial cable **248,** which is connected to the RF receiver **224.** Coaxial cable **346** from the phase shifter **268** is not connected to coaxial cable **348.**

If the strength of received RF signals falls below a threshold, the controller **226** controls the RF switches **263, 265** so that the RF device **230** operates with both of the dipole antenna elements **266(1), 266(2).** An RF interference source **250** may be causing the RF signals to fall below the threshold, for example.

The controller **226** controls RF switch **263** so that coaxial cable **342** is connected to dipole antenna element **266(1)** instead of coaxial cable **340.** The phase shifter **224** now receives RF signals from dipole antenna element **266(1).** The phase shifter **224** also receives RF signals from dipole antenna element **266(2)** via coaxial cable **344.** The phase shifter **224** may include one or more discrete components, for example. The controller **226** controls RF switch **265** so that coaxial cable **346** is connected with coaxial cable **348,** which is still connected to the RF receiver **224.**

The controller **226** is connected to the RF receiver **224** to determine strength of the received RF signals. A value of the received signal strength may be determined as a signal-to-noise ratio (SNR) or as a received signal strength indicator (RSSI). Based on the strength of the received RF signals, the RF device **230** will control the RF switches **263, 265** accordingly.

Initial operation of the RF device **230** may be with dipole antenna element **266(1),** for example. If the signal strength of the received RF signals drops below an initial threshold, then the controller **226** controls the RF switches **263, 265** so that the RF device **230** is operating with both of the dipole antenna elements **266(1), 266(2).**

The controller **226** may then apply a control loop to orient the frame **222** to steer the antenna pattern **270** so that one of the nulls **272** maintains being directed towards the RF interference source **250** causing the initial threshold drop. The controller **226** may be a proportional derivative (PD) controller, for example. An output of the PD controller varies in proportion to the error signal as well as with the derivative of the error signal. An advantage of the PD controller is to increase the stability of orienting the frame **222** to steer one of the nulls **272** of the antenna pattern **270** toward an RF interference source **250** by improving control since it has the ability to predict future errors.

Another aspect is directed to a method for operating a vehicle **220** with a radio frequency (RF) device **230** as described above. The RF device **230** includes an antenna **260** comprising a housing **261,** a base **262** carried by the housing, a pair of spaced apart dipole antenna elements **266** extending upwardly from the base, and a phase sifter **268** coupled to the pair of antenna elements **266** to define an antenna pattern **270** having a pair of opposing nulls **272.** The method includes operating an RF receiver **224** coupled to the antenna **261,** and operating a controller **226** to control the propulsion arrangement **223** to orient the frame **222** to steer the antenna pattern **270** based upon the RF receiver **224.**

Many modifications and other embodiments will come to the mind of one skilled in the art having the benefit of the teachings presented in the foregoing descriptions and the associated drawings. Therefore, it is understood that the foregoing is not to be limited to the example embodiments, and that modifications and other embodiments are intended to be included within the scope of the appended claims.

## Claims

1. A radio frequency (RF) device for a vehicle, the RF device comprising:
an antenna comprising
a housing,
a rotatable base carried by the housing,
an actuator configured to selectively rotate the base,
a pair of spaced apart antenna elements carried by the rotatable base, and
a phase sifter coupled to the pair of antenna elements to define an antenna pattern having a pair of opposing nulls;
an RF receiver coupled to the antenna; and
a controller configured to drive the actuator to steer the antenna pattern based upon the RF receiver.

2. The RF device of claim 1 wherein the pair of opposing nulls in the antenna pattern are 180 degrees apart.

3. The RF device of claim 1 wherein the controller is configured to steer the antenna pattern so that one of the nulls is directed toward an RF interference source.

4. The RF device of claim 1 wherein the RF receiver operates over a frequency range, and the pair of opposing nulls are aligned over the frequency range.

5. The RF device of claim 1 wherein the phase shifter comprises at least one discrete component.

6. The RF device of claim 1 wherein the phase shifter comprises a pair of feeds coupled to respective antenna elements in a reverse configuration.

7. A method for operating a radio frequency (RF) device for a vehicle, the RF device comprising an antenna comprising a housing, a rotatable base carried by the housing, an actuator to selectively rotate the base, a pair of spaced apart antenna elements carried by the rotatable base, and a phase shifter coupled to the pair of antenna elements to define an antenna pattern having a pair of opposing nulls, the method comprising:
operating an RF receiver coupled to the antenna; and
operating a controller to drive the actuator to steer the antenna pattern based upon RF signals received by the RF receiver.

8. The method of claim 7 wherein the pair of opposing nulls in the antenna pattern are 180 degrees apart.

9. The method of claim 7 wherein the controller steers the antenna pattern so that one of the nulls is directed toward an RF interference source.

10. The method of claim 7 wherein the RF receiver operates over a frequency range, and the pair of opposing nulls are aligned over the frequency range.
